# EUROPEAN PATENT APPLICATION

(11) **EP 1 258 825 A1**
(43) Date of publication of application: **20.11.2002**
(21) Application number: 02253294.9
(22) Date of filing: 10.05.2002
(51) Int. Cl.: G06F 17/60

(54) **Automated auction processor for underwriting securities**

(30) Priority: 14.05.2001 US 290700 P
(71) Applicant: CFPH, L.L.C., New York, NY 10171 (US)
(72) Inventor: Ginsberg, Philip M., Cape Charles, VA 23310 (US); Flanagan, Jr., William J., Eastville, VA 23347 (US)
(74) Representative: Jones, David Colin

(57) **Abstract**

An automated underwriting auction processor is presented. States, municipalities, and other non-federal authorities issue municipal securities to an underwriter or syndicate of underwriters during an underwriting period. The underwriters then trade the securities in a secondary market. The efficiency and fairness of this process is improved using a networked system, which includes multiple computers or workstations, connected to an automated auction processor. The processor provides issuers and participants equal real-time access to the underwriting process. Moreover, the automated auction processor provides a universal underwriting protocol to ensure that only qualified issuers and participants are allowed to participate. This results in a fair and more efficient underwriting process compared to the traditional sealed-bid auction and negotiated underwriting processes.

## Description

### Background of the Invention

This invention relates to underwriting. More particularly, this invention relates to an automated auction processor for underwriting select classes of securities or other commodities in accordance with specific protocols.

The trading of goods, particularly fixed income securities, has become increasingly popular in recent years. "Municipals" or "Tax Exempts" are fixed income securities issued by states, municipalities, and other non-federal authorities. Municipals advantageously differ from other types of securities in that no federal income tax is due on interest received. Municipals typically span the following maturities: seven days to less than two years (money market instruments); one to ten years (notes); and up to thirty years (bonds). Municipal notes or bonds generally have a defined semi-annual interest payment cycle and many are callable or redeemable prior to their maturity dates.

Other classifications of municipals are also common. For example, general obligation bonds (GO's) are backed by the general taxing authority of a governing entity. Revenue bonds rely on specific revenue sources (e.g., highway tolls). Municipals are also classified as private activity bonds, hybrid bonds (for United States federal tax purposes), and puttable bonds that can be "put back" to the issuer for redemption.

Two common trading processes are sealed-bid auctions and negotiated underwriting. In a sealed-bid auction, bids of all potential buyers are collected and presented to the seller through a sealed bid procedure. Typically, there is one bidding round and potential buyers are not aware of their competitors' bids. The bidder with the highest bid usually wins. While applicable for most types of goods, this approach is particularly useful where there are no established exchanges or markets for the selected item. In negotiated underwriting, a potential buyer and seller privately negotiate bid and offer prices until an agreement is reached. The sealed-bid auction and negotiated underwriting processes typically occur over the telephone.

The trading of fixed income securities typically involves two stages: an underwriting period and a secondary market. In the underwriting period, issuers (e.g., states, municipalities, and other non-federal authorities) issue new municipal securities to at least one underwriter (e.g., a bank, broker, dealer, or any other institution qualified to bid), but preferably more (e.g., an underwriting syndicate, which is a group of underwriters). The underwriter or underwriting syndicate then reoffers the securities to customers in the secondary market.

During the underwriting period, an underwriter can bid on an issue directly from the issuer. An issue is typically a common class of a single or pooled municipal security at a particular issue size. The pooled municipal can be a collection of municipals from the same issuer or from different issuers. The issue size is the total dollar amount of a particular municipal security to be underwritten. The underwriting prices for the municipals, which have a face value with a set coupon (interest) rate along with other features (e.g., callability), define the issuance yields of the securities. Furthermore, the municipals are rated by one or more rating authorities (e.g., Standard and Poors Corporation, Moody's Investor Service, Inc., and Fitch Investors Service, Inc.).

In the secondary market, the underwriter reoffers the securities to customers at a price higher than what the underwriter paid for the same securities. The price difference between the initial reoffering price to the customer and the amount paid by the underwriter to the issuer is known as the underwriting spread. Municipals are typically traded "over-the-counter" (i.e., outside a defined exchange). Prices of recently auctioned municipals can fluctuate in the market as inflation expectations and supply and demand conditions change. The change in prices is generally reflected by competing bid and offer prices communicated among participants in the secondary market. For example, as the municipal bond price drops in the market, its yield increases, which reflects an overall increase in the interest rates for that type and term of security.

The size and diversity of the municipal market involves an unprecedented level of sophistication by market participants in the underwriting and distribution process, and in the bidding, offering, buying, and selling transactions involving these securities. The complexity associated with the underwriting process, the transactions, and the scale of commitment and trading undertaken by issuers necessitates a structured approach to underwriting and subsequent trading.

There are several limitations with the current trading (or underwriting) processes. One limitation is that these processes rely on after-the-fact reporting. An underwriter coordinates what a customer is willing to pay for a security with an issuer's municipal financing requirements. The results of the underwriting process are typically not known until after a transaction has been made.

Another limitation with these processes is that issuers designate individuals to allocate their securities among various underwriters for later distribution to customers. This makes it difficult to have non-public disclosure of the negotiating mechanism among the underwriters and issuers. Non-public disclosure is important for a competing investment community and its regulators to capture an accurate sequence of data. Investors need to be aware of the type, amount, and price at which their competitors are selling securities in order to remain competitive with these investors.

Current underwriting processes have other problems. The sealed-bid auction employs hidden bidding. By restricting competitor information, hidden bidding encourages lower prices, which leads to inefficient distribution. Because bidders are unaware of the bid amount submitted by other bidders, bidders will try to submit bids high enough to beat competitors' bids but low enough to exceed the next highest bid by only a small amount. Bidders will tend to submit lower bids in order to reduce the possibility of submitting a bid at a price far greater than all other bids. The other trading process, negotiated underwriting, is highly privatized, reducing the competitive pricing that leads to customers obtaining a security at a fair price. Another problem with current underwriting processes is an increase in legal and illegal political contributions, leading to controversy surrounding tax-related arbitrage restrictions (known as "yield burning"). Difficulties further arise when an underwriter (even an underwriter representing a smaller and less critical group of customers) dominates the underwriting process. While this may briefly benefit the dominating underwriter's customers, it can eventually distort pricing away from equilibrium market conditions, causing a shortfall in funding or creating funding at a higher cost for states and municipalities.

Many of the limitations and problems with current underwriting processes are due to the inefficient telephone medium used to implement the underwriting processes. There is a need to implement the trading of securities over a more efficient medium. While much of trading today involves some computer support, from simple information delivery to sophisticated trading systems that automate transactions at select criteria, these systems have not significantly impacted the process of underwriting securities in the fixed income field.

In view of the foregoing, it would be desirable to provide an automated auction processor that supports a formalized trading protocol governing the control of real-time trading in an underwriting market.

### Summary of the Invention

It is an object of this invention to provide an automated auction processor that supports a formalized trading protocol governing the control of real-time trading in an underwriting market.

In accordance with this invention, systems and methods are provided that automate an underwriting auction process. The invention includes a computer-based data processing system having program control logic for the real-time management of the underwriting process. The data processing system includes a plurality of trading workstations linked to a server for coordinated data flow and processing. The workstation preferably includes a dedicated keypad that provides individually programmed keystroke commands. Central processing logic controls the available bidding options and screen displays for each workstation.

As bids are submitted to an automated auction processor via the server, various protocols affect the quality, ranking, allocation, and reporting of the underwriting process. Quality refers to the type of auction process specified by the issuer. The issuer can electronically submit to the automated auction processor, for example, the type of security to underwrite, the amount and minimum price for the security, the time frame of the underwriting period, how the security is to be distributed (e.g., how the winner is determined and the price that the winner has to pay for the security), and qualification criteria of participating underwriters. Ranking is the prioritization of the underwriters and their respective bids based on the qualification criteria electronically submitted by the issuer. Allocation refers to the appropriation of the security by one or more underwriters at a specified price. In reporting the underwriting process, the results may be listed in a table and displayed to only those underwriters and issuers participating in the auction, or to all underwriters and issuers. The results may also be emailed to the participating underwriters and issuers or disseminated in other suitable ways.

The underwriting process preferably involves the following: qualification, pooling, bid/offer, evaluation, allocation, and information distribution. By establishing computer-enforced protocols for buyers (e.g., issuers) and sellers (e.g., participants), the underwriting process becomes more efficient with little error. Issuers implement the issuing process through similarly configured workstations. Furthermore, the protocols are universal for all issues, thereby precluding aggressive control of the issuance market in the absence of coordination among issuers and competition among potential participants. Similarly, all potential participants such as underwriters may bid through similarly configured workstations with universal protocols, thereby precluding aggressive control of the bidding process.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a diagram of an embodiment of an underwriting system in accordance with the invention;
FIG. 2 is a diagram of another embodiment of an underwriting system in accordance with the invention;
FIG. 3 is a flow diagram of an embodiment of an underwriting process in accordance with the invention; and
FIG. 4 is a block diagram of an information process for the transmission of municipal security-related information as part of an auction processor in accordance with the invention.

### Detailed Description of the Invention

The invention provides an automated underwriting auction processor. While the invention applies to different types of financial instruments, such as commodities, mortgages, and most types of fixed-income securities, the invention is described herein in the context of municipal securities for clarity.

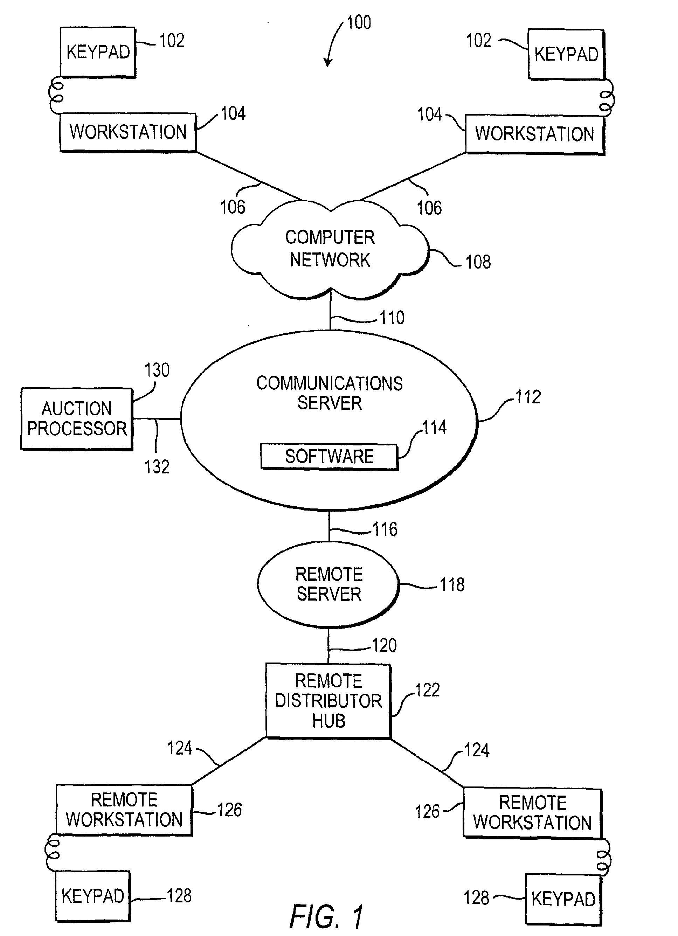

FIG. 1 shows an embodiment of an underwriting system 100 in accordance with the invention. As illustrated, underwriting system 100 includes one or more local workstations 104 and one or more remote workstations 126. Local workstations 104 can be linked to buyers (e.g., participants), while remote workstations 126 can be linked to sellers (e.g., issuers). In the underwriting period, the participants may be underwriters (e.g., banks, brokers, dealers, or other institutional participants) and the issuers may be states, municipalities, or other non-federal authorities. In the secondary market, the participants may be customers and the issuers may be underwriters.

Workstations 104 and 126 can be any suitable means for presenting data and accepting input from users. For example, workstations 104 and 126 can be personal computers, laptop computers, mainframe computers, personal digital assistants (PDAs), two-way pagers, cellular telephones, or any other suitable device or combination of the same. They can include processors selected from Pentium® processor-based personal computers, Scalable Processor Architecture (SPARC) Stations, or other microprocessor-based systems. Workstations 104 and 126 can be customized to provide specifically tailored platforms to support the data processing of underwriting. These platforms can include operating systems such as UNIX, LINUX, Windows, NT, DOS, etc.

Workstations 104 and 126 each include a display screen for displaying underwriting activity. Workstations 104 and 126 can also have dedicated keypads 102 and 128, respectively. Keypads 102 and 128 are preferably highly specialized for providing individually programmed keystroke underwriting commands customized at individual workstations 104 and 126, respectively. Keypads 102 and 128 can include a keyboard, a mouse, or any other suitable input device or combination of the same. Alternatively, keypads 102 and 128 can be integrated into workstations 104 and 126, respectively via a touch-screen display. Buyers and sellers can issue trading commands by touching appropriate buttons on the display screen.

Local workstations 104 are connected to a communications server 112 via a communications link 106, a computer network 108, and a communications link 110. Computer network 108 can be any suitable network or combination of networks, such as an Ethernet, a token ring, a token bus, the Internet, an intranet, a wide area network (WAN), a local area network (LAN), a wireless network, a digital subscriber line (DSL) network, a frame relay network, an asynchronous transfer mode network (ATM), a virtual private network (VPN), etc. There may be more than one computer network 108 connected to multiple local workstations 104 (only one has been shown in FIG. 1 for clarity). Communications links 106 and 110 can be any suitable links for communicating data, such as network links, dial-up links, wireless links, hard-wired links, etc.

Remote workstations 126 are connected to communications server 112 via a communications link 124, a remote distributor hub 122, a communications link 120, a remote server 118, and a communications link 116. There may be more than one remote server 118 connected to multiple remote distributor hubs 122, each of which may be connected to multiple remote workstations 126 (only one remote server 118 and remote distributor hub 122 are shown in FIG. 1 for clarity). Remote server 118 and remote distributor hub 122 allow remote workstations 126 to communicate with local workstations 104 or other remote workstations 126. Communications links 116, 120, and 124 can be any suitable links for communicating data, including network links, dial-up links, wireless links, hard-wired links, etc.

Communications server 112, which may be an Internet server or any other suitable server, includes controlling software 114 for managing the interaction of data flow to individual local workstations 104 and remote workstations 126. Communications server 112 is preferably also connected to an automated auction processor 130 via a communications link 132, which may be any suitable link for communicating data.

Automated auction processor 130 preferably receives data from local workstations 104 and remote workstations 126, and processes this data in real-time. In the underwriting period, automated auction processor 130 effectuates the sale of a security from one or more issuers to one or more underwriters in real-time. In the secondary market, automated auction processor 130 effectuates the sale of the security from one or more underwriters to one or more customers in real-time. Automated auction processor 130 may be a computer or server that accepts input data from issuers and participants. Auction processor 130 is automated, without the need of human intervention, to monitor bidding activity and produce results of a bidding round. Once the bidding round is finished and the results are determined, controlling software 114 at communications server 112 manages the interaction of data between auction processor 130, local workstations 104, and remote workstations 126.

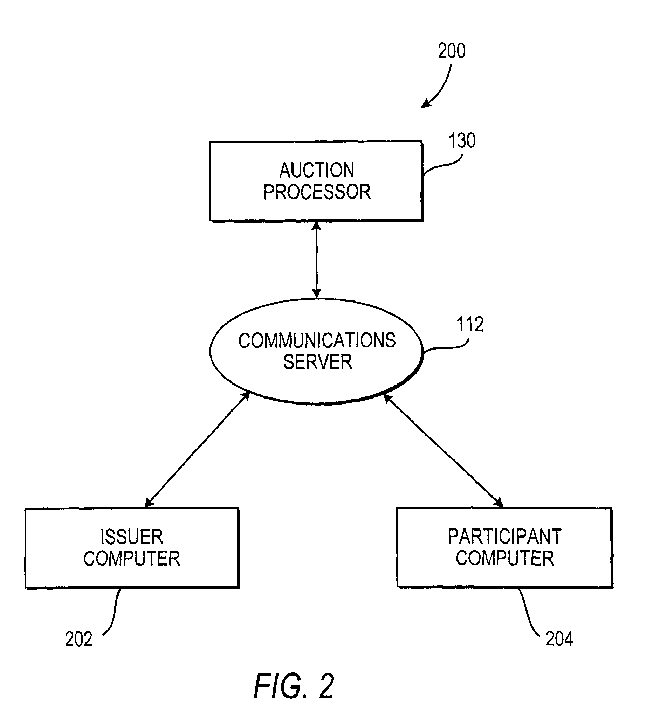

FIG. 2 shows a diagram of another embodiment of an underwriting system 200 in accordance with the invention. Underwriting system 200 includes an issuer computer 202, a participant computer 204, communications server 112, and automated auction processor 130. There may be more than one issuer computer 202 and participant computer 204 (only one of each is shown in FIG. 2 for clarity). Computers 202 and 204 can include multiple workstations (similar to those shown in FIG. 1) linked by a high speed communication channel to permit real-time distribution and exchange of underwriting data. For example, issuer computer 202 may include remote workstations 126, remote distributor hub 122, and remote server 118. Participant computer 204 may include local workstations 104 and computer network 108. Computers 202 and 204 can alternatively be individual workstations (each with a dedicated keypad) linked directly to communications server 112 (which also includes software 114). Computers 202 and 204 effectuate the trading of securities via automated auction processor 130 in real-time. Communications server 112 allows data to be transferred between automated auction processor 130 and computers 202 and 204. Computers 202 and 204 can be operated by issuers and participants, respectively, in the underwriting period and secondary market.

Computers 202 and 204 each preferably include central processing logic that provides offering options, bidding options, and other screen displays on each workstation. Control logic and protocols may be universal for each computer 202 and 204 in order to provide coordination among issuers and competition among potential participants.

Automated auction processor 130 executes underwriting transactions between issuers and participants in real-time. Automated auction processor 130 allows municipal securities to be issued at multi-round bidding levels, provides controlled access to bidding commands pursuant to pre-established bidding criteria, and processes current bidding activity by customers in real-time. As bids are submitted to automated auction processor 130 via communications server 112, various protocols affect the quality, ranking, allocation, and reporting of the underwriting process to computers 202 and 204. Quality refers to the type of auction process specified by the issuer. The issuer can electronically submit to automated auction processor 130, for example, the type of security to underwrite, the amount and minimum price of the security, the time frame of the underwriting period, how the security is to be distributed (e.g., how the winner is determined and the price that the winner has to pay for the security), and qualification criteria of participating underwriters. Ranking is the prioritization of the underwriters and their respective bids based on the qualification criteria electronically submitted by the issuer. Allocation refers to the appropriation of the security by one or more underwriters at a specified price. In reporting the underwriting process, the results may be listed in a table and displayed to only those underwriters and issuers participating in the auction, or to all underwriters and issuers. The results may also be emailed to the participating underwriters and issuers or disseminated in any other suitable way.

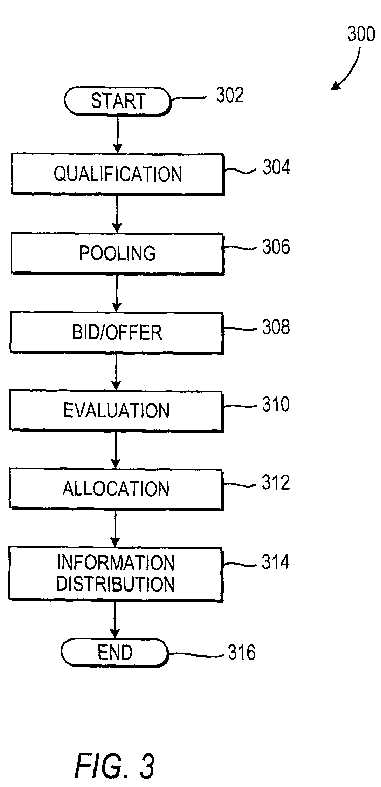

FIG. 3 shows an underwriting process 300 between issuers (e.g., municipalities or regional authorities) and participants (e.g., underwriters) in accordance with the invention. Issuers at issuer computer 202 and participants at participant computer 204 electronically submit data to automated auction processor 130, which implements underwriting process 300. Note that process 300 also applies to the secondary market between underwriters and customers. Underwriting process 300 begins at step 302 with an issuer (e.g., a municipal or regional authority) contacting a financial advisor to request advice for funding with regard to the issuer's financial requirements and capabilities.

Step 304 is the qualification of underwriters. The issuer at issuer computer 202 electronically submits to automated auction processor 130 an auction process (a set of rules for making and ranking bids and offers), an issue type, an issue size, and other suitable data. The issuer may also establish requirements and preselect securities' characteristics appropriate for issuance. Potential underwriters also enter the process at step 304. Potential underwriters at participant computer 204 may electronically submit to automated auction processor 130 background information (e.g., information about the business such as type of business, location, size, revenue, etc.), information about prior underwriting transactions, select issues of interest, typical bid ranges, and any other suitable information. This information may only need to be entered the first time that an underwriter participates in an automated underwriting process. Thereafter, the underwriter's information may be stored in automated auction processor 130 and may be automatically updated after each underwriting transaction. Only those underwriters who meet the qualification criteria set by an issuer for a particular security are qualified to bid. Criteria for qualifying underwriters can include the following: experience in underwriting, past relationships with the underwriter (e.g., prior successful transactions), underwriting capital, size, and client base, etc. Once an underwriter electronically submits a request to bid on a particular security, automated auction processor 130 compares in real-time the underwriter's background information to qualification criteria submitted by an issuer for that particular security. Automated auction processor 130 either allows the underwriter to proceed (if qualified to bid) or informs the underwriter that the underwriter is not qualified to bid. Automated auction processor 130 may electronically send a message to an underwriter (e.g., via a pop-up window that displays on the underwriter's screen or by sending an email) indicating that the underwriter is not qualified or may simply prevent the underwriter from entering bidding information at participant computer 204. Once qualified underwriters are determined, automated auction processor may designate lead underwriter, syndicate member, or selling group member based on qualification criteria. Logic at this step preferably provides rankings of underwriting capability and quality that are electronically transmitted to dedicated display screens at issuer computer 202 and participant computer 204.

Next, process 300 moves to pooling step 306. Automated auction processor 130 may collect municipal securities from a plurality of issuers and assemble them into a security pool. Securities are preferably sold to underwriters as a security pool. In addition, automated auction processor 130 may bring underwriters together to collectively bid on the security pool. Pooling may be advantageous for both issuers and underwriters. For example, an issuer may be unable to sell a particular security alone, but may have a greater chance of selling the security when it is combined with securities from multiple issuers. An underwriter may want to purchase a particular amount of a security, but that exact amount may be unavailable. Multiple underwriters may collectively purchase a security pool, with each underwriter purchasing their desired amount.

Process 300 then moves to bid/offer step 308 where bids and offers are accepted at an auction price by automated auction processor 130. Issuers (e.g., municipalities), referred to as "offerors" or "makers," receive bidding commands. Participants (e.g., underwriters), known as "current makers" or "current contra makers," preferably have the authority under system command to control an auction round for a predetermined duration of time. This predetermined duration of time may be initially determined by the issuer. Depending on the qualification of the participant (made during qualification step 304), certain securities are made available to that participant to bid on. Offers made by issuers and bids made by participants at various stages of the auction process are automatically displayed to all participants in real-time by auction processor 130.

Once the bid/offer round is completed, process 300 moves to evaluation step 310 where the activity of the previous bid/offer state is measured. Again, automated auction processor 130 evaluates the underwriters participating in the auction round to determine whether the underwriters are still eligible to participate in the underwriting process. Automated auction processor 130 automatically controls in real-time the rankings among the underwriters and the sequencing of the next round of the auction process.

Process 300 next moves to allocation step 312. Automated auction processor 130 uses the auction process electronically submitted in qualification step 304 by the issuer to determine the winner of the bidding round and the amount the winner has to pay. For example, a municipality may specify in qualification step 304 that at the end of the bid/offer step, the underwriter with the highest bid will get the desired amount of securities. The price of the securities will be the bid price made by that underwriter. Alternatively, a municipality may specify that the securities will be awarded to the underwriter with the highest bid but the price of the securities will be that of the second highest bid. Because the desired amount of securities by an underwriter may not exactly equal the total amount of securities offered, the securities may be allocated to multiple underwriters.

At information distribution step 314, automated auction processor 130 distributes in real-time information about the securities amounts allocated to various underwriters. The results of underwriting process 300 may be automatically displayed on display screens at issuer computer 202 and participant computer 204. Automated auction processor 130 may also update and track the actual performance of the underwriters from the current auction process and all previous auctions processes. Process 300 ends at step 316.

Automated auction processor 130 allows high volume bidding and efficient distribution activity in preferably real-time. All municipalities implement the issuing process through similarly configured workstations, where the protocols are universal for all issues. This precludes aggressive control of the issuance market in the absence of coordination among issuers and of competition among potential underwriters. Similarly, all potential underwriters will bid via similarly configured workstations having universal protocols, thereby precluding aggressive control of the bidding process and avoiding potential conflicts of interest. Additionally, automated auction processor 130 provides a more timely way of executing a transaction and ensures that only those currently qualified to bid are allowed access to the auction process.

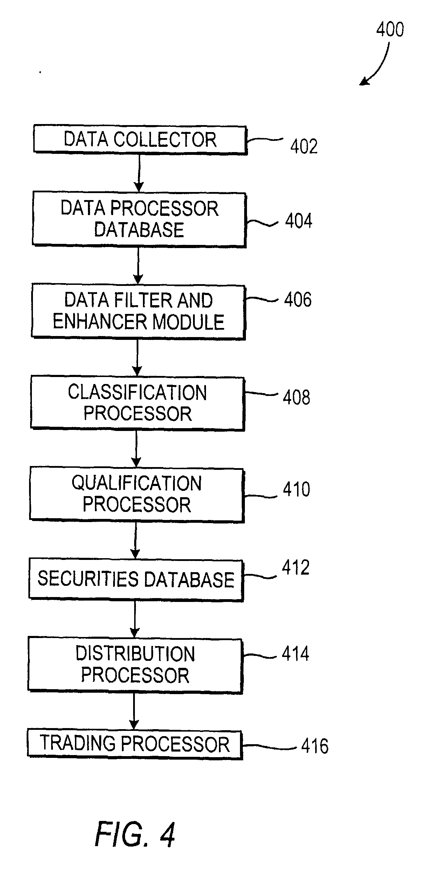

FIG. 4 shows a preferred information path 400 for the transmission of municipal security-related information in automated auction processor 130 in accordance with the invention. Information path 400 may be controlled by control logic, which directs the processing of all underwriting data and electronically provides the underwriting data and results of the underwriting process to issuer computer 202 and participant computer 204. Beginning at data collector 402, automated auction processor 130 collects underwriting data or online market data from a plurality of online terminals (e.g., from issuer computer 202 and participant computer 204). Such underwriting data includes securities to be sold by issuers at issuer computer 202 and bids on those securities by participants at participant computer 204. There may be a continual exchange of information between the issuers and participants as bids and incremental offering sizes are transacted in real-time. The online auction data may be a bid price of an incremental value, which may be collected in data collector 402 and entered into a data processor database 404.

Next, the online auction data is transferred to a data filter and enhancer module 406. When the data includes a request to increase a bid by a specified increment (e.g., 1/32), the online auction data may be converted to a proper format (to reflect the change in bid price) for display at issuer computer 202 and participant computer 204. This data may be displayed on workstations of issuers and underwriters participating in the offering and bidding of a particular security.

Once the data has been converted into digital form, the data is transmitted to classification processor 408, where it is organized into an appropriate format for display (e.g., a coordinated array of data in matrix format). The format of the bid and offer display and the time interval for different rounds of the auction process are automatically determined.

Once appropriately formatted, the online auction data is transmitted to qualification processor 410 for determination of a real-time command selection. Limits in the amount of securities to be allocated to participants are set. In addition, the processor also determines whether a participant is qualified to bid in a particular round for a particular security.

This information is loaded into a securities database 412. Securities database 412 contains information on each particular security that a participant has successfully bid on.

At distribution processor 414, the processor decides which participants to allocate the securities to and determines the method of distributing the securities from database 412.

Finally, the continual distribution of securities data to participants (e.g., traders and brokers within the investment community, including clearance and service operators among others), and the execution of declaring and reporting functions associated with such trading, occurs in trading processor 416.

Thus it is seen that systems and methods are provided for automating an underwriting auction process that fairly and efficiently transacts the trading of securities using a formalized trading protocol in near real-time. One skilled in the art will appreciate that the invention can be practiced by other than the described embodiments, which are presented for purposes of illustration and not of limitation, and the invention is limited only by the claims which follow.

## Claims

1. A system for executing an underwriting transaction, said system comprising:
a first computer for operation by at least one issuer, said issuer comprising one of a state, a municipality, and another non-federal authority;
a second computer for operation by at least one underwriter, said underwriter comprising one of a bank, a broker, and a dealer; and
an automated underwriting auction processor coupled to both said first and said second computers, said automated auction processor comprising control logic that maintains a universal protocol for said issuer and said underwriter for processing to consummation said underwriting transaction in real-time.

2. The system of claim 1 wherein said underwriting transaction is a transfer of an issue from said issuer to said underwriter in exchange for a bid amount accepted by said issuer.

3. The system of claim 1 wherein at least one of said first and said second computers comprises multiple workstations coupled to a computer network.

4. The system of claim 3 wherein each said workstation in said first computer has a customized keypad for executing offer commands.

5. The system of claim 3 wherein each said workstation in said second computer has a customized keypad for executing bid commands.

6. The system of claim 3 wherein each said workstation has a display screen to display underwriting activity in real-time.

7. The system of claim 6 wherein said underwriting activity includes an offer from said issuer and a bid from said underwriter in response to said offer.

8. The system of claim 1 wherein said first computer receives from said issuer an issue type, an issue size, and qualification criteria for underwriters.

9. The system of claim 8 wherein said issue type is a financial instrument.

10. The system of claim 9 wherein said financial instrument is a municipal security.

11. The system of claim 1 wherein said second computer receives from said underwriter background information on prior underwriting transactions, an issue of interest, or a bid on said issue of interest.

12. The system of claim 1 wherein said automated underwriting auction processor permits multi-round bidding levels, controls said underwriter's ability to enter a bidding command based on pre-established bidding criteria, and executes said bidding command in real-time.

13. The system of claim 1 wherein said automated underwriting auction processor automatically performs the following:
qualifies each said underwriter;
pools issues from each said issuer;
receives bids on said issue pool from at least one said underwriter qualified to bid;
evaluates said bids;
allocates said issue pool to at least one said underwriter; and
distributes results of said underwriting transaction to both said first and said second computers.

14. The system of claim 13 wherein said automated underwriting auction processor compares an underwriter to qualification criteria set by an issuer to determine whether said underwriter is qualified to bid on said issue pool.

15. The system of claim 13 wherein said automated underwriting auction processor pools each said underwriter qualified to bid, wherein said underwriter pool collectively bids on said issue pool.

16. The system of claim 13 wherein said automated underwriting auction processor:
compares each said underwriter that bids on said issue pool to qualification criteria set by an issuer to determine whether each said underwriter that bid on said issue pool is qualified; and
compares said bids to an auction process set by said issuer, wherein said auction process comprises a set of rules for determining who receives said issue pool and the bid amount for said issue pool.

17. A system for executing an underwriting transaction, said system comprising:
a first computer for operation by at least one issuer, said issuer comprising one of a state, a municipality, and another non-federal authority;
a second computer for operation by at least one underwriter, said underwriter comprising one of a bank, a broker, and a dealer; and
an automated underwriting auction processor coupled to both said first and second computers, said auction processor comprising control logic that maintains a universal protocol for both said issuer and said underwriter for executing said underwriting transaction in real-time, wherein said control logic:
qualifies each said underwriter;
pools issues from each said issuer;
receives bids on said issue pool from each said underwriter qualified to bid;
evaluates said bids;
allocates said issues to at least one said underwriter; and
distributes results of said underwriting transaction to both said first and said second computers.

18. The system of claim 17 wherein said control logic that pools collects issues from each said issuer into one offering that is presented to each said underwriter qualified to bid.

19. The system of claim 17 wherein said control logic pools each said underwriter qualified to bid, wherein said underwriter pool collectively bids on said issue pool.

20. The system of claim 17 wherein said control logic that evaluates:
compares each said underwriter that bids on said issue pool to qualification criteria set by each said issuer to determine whether each said underwriter that bid on said issue pool is qualified; and
compares said bids to an auction process set by each said issuer, wherein said auction process comprises a set of rules for determining who receives said issue pool and the bid amount for said issue pool.

21. A method for executing an underwriting transaction, said method comprising:
receiving electronically offers of financial instruments from a plurality of issuers, wherein each of said plurality of issuers is one of a state, a municipality, and another non-federal authority;
qualifying a plurality of underwriters in accordance with electronically submitted criteria, each said underwriter being one of a bank, a broker, and a dealer;
pooling said financial instruments from said plurality of issuers;
receiving electronically bids from each of said plurality of underwriters qualified to bid; and
distributing said financial instruments to at least one of said plurality of underwriters.

22. The method of claim 21 wherein said receiving electronically offers of financial instruments comprises receiving electronically an issue type, an issue size, and qualification criteria of underwriters.

23. The method of claim 21 wherein said financial instruments are municipal securities.

24. The method of claim 21 wherein said qualifying comprises selecting said plurality of underwriters based on qualification criteria electronically submitted by said plurality of issuers.

25. The method of claim 24 wherein said qualification criteria includes at least one of the following:
experience in underwriting;
prior underwriting relationships with said plurality of issuers;
underwriting capital;
size; and
client base.

26. The method of claim 21 wherein said pooling further comprises pooling said plurality of underwriters to collectively bid electronically on said pool of financial instruments.

27. The method of claim 21 wherein said receiving electronically said bids further comprises displaying said bids to each of said plurality of underwriters and each of said plurality of issuers.

28. The method of claim 21 wherein said distributing further comprises evaluating said bids from previously qualified underwriters to determine whether said previously qualified underwriters still qualify to participate in said underwriting transaction.

29. The method of claim 28 further comprising allocating said financial instruments at a particular bid price to at least one of said plurality of underwriters.

30. The method of claim 29 wherein said particular bid price is equal to one of said bids.

31. The method of claim 29 wherein said distributing further comprises disclosing electronically results of said underwriting transaction to each of said plurality of issuers and each of said plurality of underwriters qualified to bid.

32. A method for executing an underwriting transaction, said method comprising:
receiving electronically an offer of a financial instrument from an issuer, wherein said issuer is one of a state, a municipality, and another non-federal authority;
qualifying an underwriter in accordance with electronically submitted criteria, said underwriter being one of a bank, a broker, and a dealer;
pooling said financial instrument from said issuer with another financial instrument from a second issuer;
receiving electronically a bid from said underwriter qualified to bid; and
distributing said financial instruments to said underwriter.

33. Apparatus for executing an underwriting transaction, said apparatus comprising:
a first computer means for operation by at least one issuer, said issuer comprising one of a state, a municipality, and another non-federal authority;
a second computer means for operation by at least one underwriter, said underwriter comprising one of a bank, a broker, and a dealer; and
an automated underwriting auction processor means coupled to both said first and said second computer means, said automated auction processor means comprising control logic that maintains a universal protocol for said issuer and said underwriter for processing to consummation said underwriting transaction in real-time.

34. Apparatus for executing an underwriting transaction, said apparatus comprising:
means for receiving electronically an offer of a financial instrument from an issuer, wherein said issuer is one of a state, a municipality, and another non-federal authority;
means for qualifying an underwriter in accordance with electronically submitted criteria, said underwriter being one of a bank, a broker, and a dealer;
means for pooling said financial instrument from said issuer with another financial instrument from a second issuer;
means for receiving electronically a bid from said underwriter qualified to bid; and
means for distributing said financial instruments to said underwriter.
